# EUROPEAN PATENT SPECIFICATION

(11) **EP 1 416 159 B1**
(45) Date of publication and mention of the grant of the patent: **29.04.2009**
(21) Application number: 03256612.7
(22) Date of filing: 21.10.2003
(51) Int. Cl.: F04B 39/12, F04B 39/02, F04B 27/04, F04B 1/04

(54) **Oil leak system for mechanical shaft seals**
Öl-leckage System für Gleitringdichtungen
Système de fuite d'huile pour des joints d'étanchéité

(30) Priority: 30.10.2002 US 283939
(43) Date of publication of application: 06.05.2004
(73) Proprietor: CARRIER CORPORATION, Farmington, Connecticut 06034-4015 (US)
(72) Inventor: Duppert, Ronald John, Fayetteville, New York 13066 (US); Wright, Kenneth Alan, Syracuse, New York 13207 (US); Wyker, Christopher Arthur, Liverpool, New York 13088 (US)
(74) Representative: Leckey, David Herbert

(56) References cited:
- EP-A- 0 887 550
- EP-A- 0 999 364
- US-A- 1 848 595
- US-A- 4 425 838
- US-A- 5 009 435
- US-B1- 6 325 175

## Description

### BACKGROUND OF THE INVENTION

### 1. Field of the Invention

The present invention relates to a system for controlling oil seepage from a compressor. More particularly, the present invention concerns a system for diverting and collecting excess oil originating in the area of the shaft seal of the crankshaft of a reciprocating compressor.

### 2. Background Art

Refrigeration systems, such as the type used in transport refrigeration equipment, include, in the simplest form, a compressor, a condenser, an expansion device and an evaporator serially interconnected to form a closed refrigeration circulation path. Typically, such systems use a reciprocating type compressor that is lubricated by a lubricating oil which mixes with the refrigerant being compressed therein.

A typical reciprocating compressor includes a piston reciprocating within a cylinder for mechanically compressing gaseous refrigerant. Appropriate manifolds and valves are provided to allow gas to be drawn into the cylinder during the down stroke of the piston and to be compressed during the up stroke.

Oil is used in such compressors to lubricate the various parts and interfaces there between. To maintain refrigerant pressure within the compressor, mechanical shaft seals are used that deploy an oil film to seal against the leakage of pressurized gas and to lubricate the faces of the seal during operation. For example, such seals are used on the crankshaft of the compressor such as in the vicinity of the gland plate. Oil leakage across the seal faces is a common problem with any mechanical shaft seal. If such oil is allowed to leak unabated, external oil leakage through the crankcase can result. Typically such leakage is more visually unpleasing and alarming rather than detrimental to compressor function; however, such leakage often leads to unnecessary component replacement of the mechanical shaft seal components

Accordingly, devices have been deployed to divert excess oil from the crankshaft seal area to hide external leakages. One such device is an external masking device used on an open-drive compressor known as the Bock FKX40/465. The device allows oil to leak to an external pocket, which is open to the atmosphere, on the outside of the gland plate and then utilizes an absorbent material to capture the excess oil over flowing therefrom. The absorbent material is encapsulated by a band of spring steel that is wrapped around the outside diameter of the material which is in turn wrapped around the gland plate housing in proximity to the external pocket.

While effective, these types of designs use an oil soaked external absorbent band which attracts dirt and can soil its surroundings, adding to the soiling of the external surfaces of the compressor.

A compressor having the features of the preamble of claim 1 is disclosed in US-A-1 848595. Other compressors having lubricant diversion mechanisms are disclosed in EP-A-887550 and EP-A-999364.

### SUMMARY OF THE INVENTION

It is an object of the present invention in a preferred embodiment at least to reduce oil leakage in a device using shaft seals.

It is a further object of the present invention in a preferred embodiment at least to provide an improved mechanism for diverting excess oil away from a shaft seal.

It is another object of the present invention in a preferred embodiment at least to provide an improved mechanism for collecting excess oil after its diversion from a shaft seal.

It is another object of the present invention in a preferred embodiment at least to provide a means for absorbing excess oil from the vicinity of a shaft seal.

It is still another object of the present invention in a preferred embodiment at least to provide a means for providing external notice of excess oil absorbed from the vicinity of a mechanical shaft seal

The present invention provides a compressor as claimed in claim 1.

In the described embodiment, the receiver is in the form of an internal cavity which includes a removable cartridge located in the cavity to collect the excess amount of lubricant.

### BRIEF DESCRIPTION OF THE DRAWINGS

FIG. 1 is a schematic view of a reciprocating compressor incorporating the device of the present invention;
FIG 2 is an enlarged view of the crankshaft seal area of FIG. 1;
FIG 3 is an exploded end view of the compressor shown in FIG. 1, with the absorbent cartridge shown being installed;
FIG. 4 is a further blown up view of the view shown in FIG. 2;
FIG. 5 is an enlarged cut-away view of FIG. 3, showing the oil flow passages; and
FIG. 6 is an enlarged view of the absorbent cartridge shown in FIG. 3.

### DESCRIPTION OF THE PREFERRED EMBODIMENT

The invention as described herein will refer to a reciprocating compressor for use with an air conditioning or refrigeration system. Although this compressor is shown in a configuration and described relative to incorporation with a refrigeration circuit within an air conditioning system or a refrigeration system it is to be understood that this method of oil collection and diversion is equally applicable to other types of compressors, pumps and other applications.

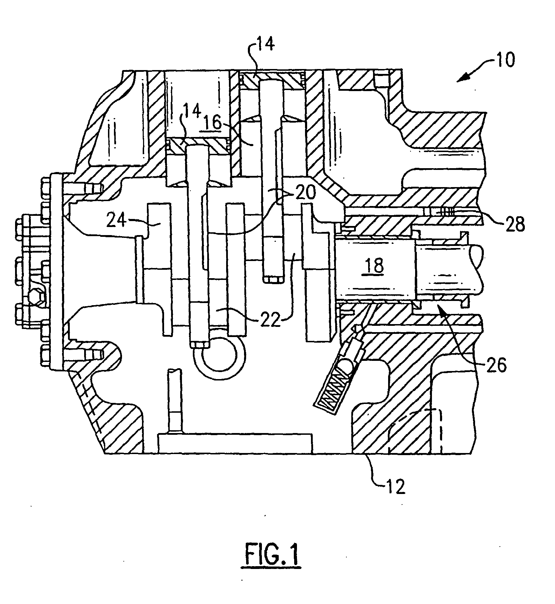

Referring now to FIG. 1, shown is a compressor 10 including shell 12. Working pistons 14 are mounted for reciprocating movement within cylinders 16. Each piston is connected to crankshaft 18 via a connecting rod 20. Connecting rod 20 is secured around offset portion 22 of crankshaft 18. Crankshaft 18 includes counterbalance 24 for balancing the rotational irregularities in the crankshaft. The crankshaft is mounted and rotates within sleeve 28 and extends through shaft seal cavity 26 of housing 12.

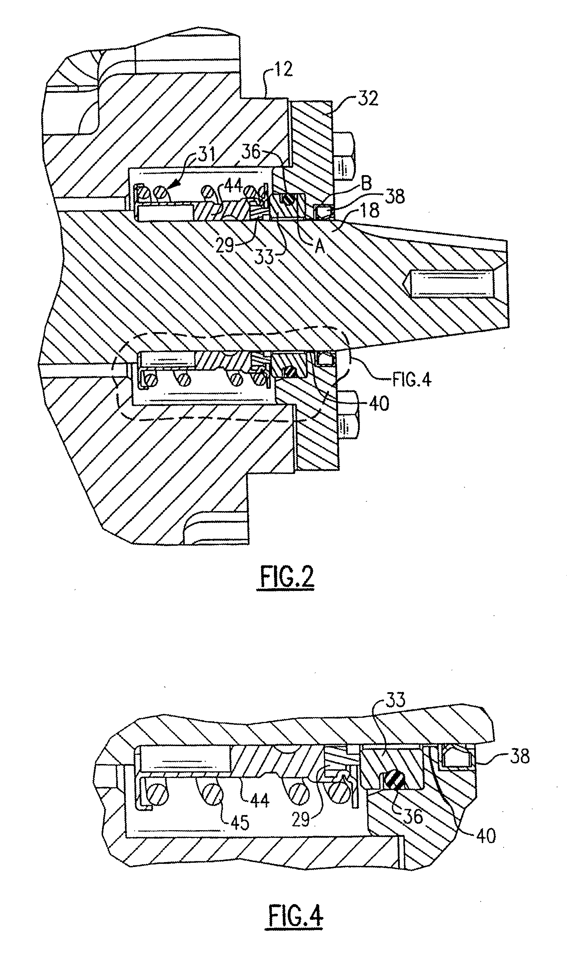

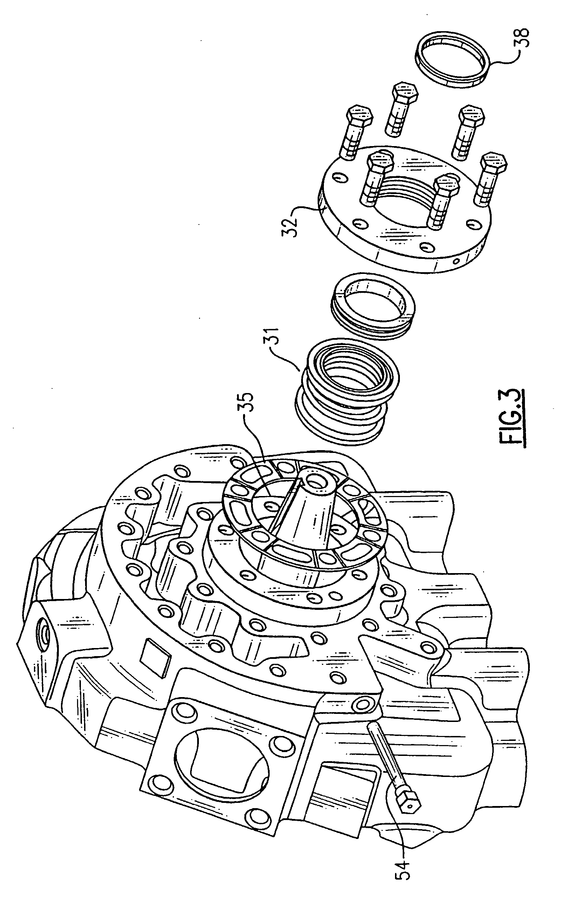

Referring to FIG. 2 and 4, the crankshaft seal mechanism 31 is shown in greater detail at the point where the housing 12 is exited by the crankshaft. The crankshaft 18 passes through the spring assembly 45, shaft seal faces 29 and 33, gland plate 32 and lip seal 38. The face seal 33 is substantially cylindrical in shape and includes an O-ring 36, which holds it stationary within inner diameter A of the gland plate 32. The lip seal 38, located in gland plate adjacent to diameter A, in smaller diameter B, has the function of preventing dirt from entering the shaft seal cavity. An inner disc-shaped space 40 is located between face seal 33 and lip seal 38. As shown in FIG. 3, a gland plate gasket 35 is used to prevent seepage between the housing and the gland plate.

The crankshaft seal mechanism further includes a cylindrical body 44 formed from a resilient material, using oil between it and the crankshaft to act as a refrigerant seal. A spring 45 wrapped around the exterior of the body 44 and resting against the crankshaft seal thrust face provides axial loading between the two shaft seal faces 29 and 33. The two faces are loaded such that, with the use of oil, they will act as a refrigerant seal. In the prior art, where oil passing across the two shaft seal faces is not removed or redirected, it will pass through crankshaft to the lip seal interface that is located as shown in FIG 3, leading to leakage and soiling of the external surfaces of the compressor. This external leakage and soiling often leads to incorrect conclusions that a serious mechanical problem exists with the compressor.

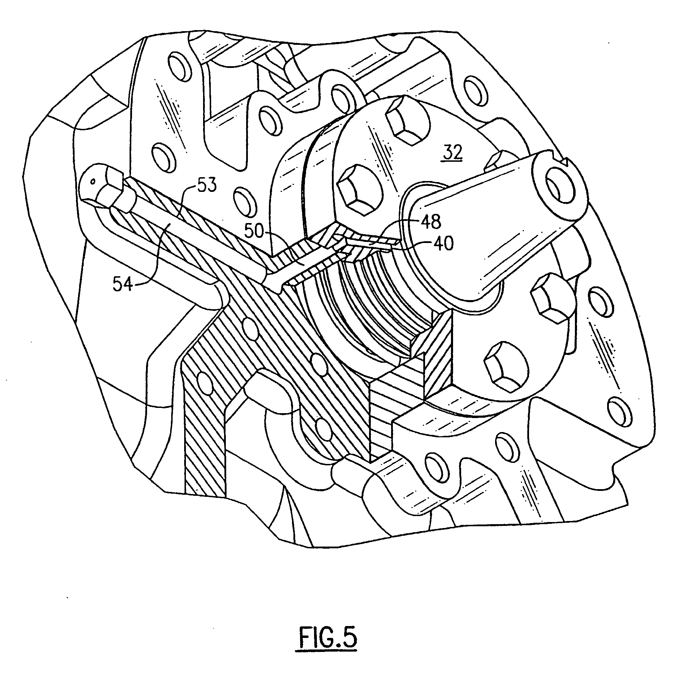

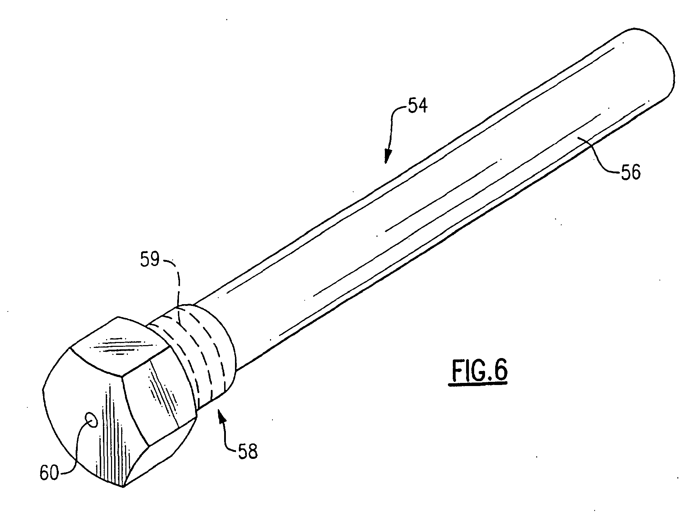

The invention as provided herein operates to remove the excess oil to prevent detrimental effects thereof. Referring to FIG. 5, in accordance with the principles of the present invention, a first passage 48 is provided in gland plate 32 that leads to a second passage 50 in housing 12, which further leads to a receiver, and in the one embodiment, an internal cavity 53. Accordingly, excess oil leaves space 40 through first passage 48, within which it travels to second passage 50 in the crankcase housing. Oil then travels within second passage 50 to internal cavity 53. In the preferred embodiment, the internal cavity is elongated and accepts an elongated cartridge or insert 54, also shown in FIG. 6, having an elongated portion formed of an absorbent material for absorbing the oil within internal cavity 53. Within the scope of the invention, the cavity could have other shapes or configurations, with a complementary shaped cartridge or insert. In the preferred embodiment, the cartridge 54, includes an elongated absorbent portion 56 and a connecting portion 58. The crankcase housing at the external end of cavity 53, in one embodiment, is threaded to engage a threaded interface 59 of connecting portion 58 of cartridge 54, securing the insert within cavity 53 for the absorption of oil. Other connection interfaces could be used as well such as a snap fit, tapered force fit or rotatably locking fit as long as such connections make an appropriate seal and secure connection, and allow the cartridge or insert to be easily removed for servicing. Threaded end 58 includes a weep hole 60. Hole 60 equalizes the pressure in the crankcase oil cavity with atmospheric pressure, allowing the oil to drain freely from the crankcase oil cavity to the internal oil cavity 53. The weep hole 60 further acts as a visual indicator as to when the cartridge 54 is full of oil, and replacement is needed, as oil will begin to weep from the hole when saturation is reached. Upon saturation, the cartridge can be removed in the field and replaced with a new cartridge, easing serviceability of the compressor. An alternative design to the absorbent cartridge described above is a cartridge or insert configured as described but with an integral well, as opposed to an absorbent material, for collecting the excess lubricant, which could be removed and emptied.

While the invention has been described in reference to a preferred embodiment and a particular type of compressor, it is to be understood by those skilled in the art that modifications and variations can be effected within the scope of the appended claims and the invention could be applied to different types of compressors or other mechanisms incorporating similar type shaft seals.

## Claims

1. A compressor (10) comprising:
a housing (12);
a shaft (18) having shaft seals (29, 33);
a lubricant;
a compression device (14, 16) for compressing a refrigerant;
a shaft sealing mechanism (31) using said lubricant for preventing compressor refrigerant from leaking out of the compressor housing (12);
a space (40) within said shaft sealing mechanism (31) where said lubricant collects;
a diversion mechanism (48;50) for directing an excess amount of said lubricant from said space (40); and
a receiver (53) for receiving said excess amount of said lubricant from said diversion mechanism; **characterised in that** it further comprises:
a removable cartridge (54) for placement in said receiver (53) for collecting said excess amount of said lubricant.

2. The compressor according to claim 1, wherein said removable cartridge (54) includes an absorbent material for absorbing said excess amount of said lubricant.

3. The compressor according to claim 1 or 2, wherein said removable cartridge (54) is securable to the housing (12) and in said receiver (53).

4. The compressor according to any of claims 1 to 3, wherein said removable cartridge (54) includes an opening (60) exposed to atmospheric pressure for facilitating a visual assessment of the saturation level of said cartridge

5. The compressor according to any preceding claim, comprising a passage (50) in said housing (12) leading to said receiver (53).

6. The compressor according to any preceding claim, wherein said shaft sealing mechanism includes a mechanical shaft seal (44), first and second face seals (29,33), and a lip seal (38), said space (40) being located between said second face seal (33) and said lip seal (38).

7. The compressor according to any preceding claim wherein said shaft is a crankshaft (18)

## Patentansprüche

1. Verdichter (10), aufweisend:
ein Gehäuse (12);
eine Welle (18) mit Wellendichtungen (29, 33);
ein Schmiermittel;
eine Verdichtungsvorrichtung (14, 16) zum Verdichten eines Kältemittels;
einen Wellenabdichtmechanismus (31), der das Schmiermittel dafür verwendet, eine Leckage von Verdichter-Kältemittel aus dem Verdichtergehäuse (12) heraus zu verhindern;
einen Raum (40) innerhalb des Wellenabdichtmechanismus (31), in dem sich das Schmiermittel sammelt;
einen Abführmechanismus (48; 50) zum Ausleiten einer überschüssigen Menge an Schmiermittel aus dem Raum (40); und
eine Aufnahmeeinrichtung (53) zum Aufnehmen der überschüssigen Menge an Schmiermittel von dem Abführmechanismus;
**dadurch gekennzeichnet, dass** der Verdichter ferner Folgendes aufweist:
eine herausnehmbare Kartusche (54) für die Platzierung in der Aufnahmeeinrichtung (53) zum Sammeln der überschüssigen Menge an Schmiermittel.

2. Verdichter nach Anspruch 1,
wobei die herausnehmbare Kartusche (54) ein absorbierendes Material zum Absorbieren der überschüssigen Menge an Schmiermittel beinhaltet.

3. Verdichter nach Anspruch 1 oder 2,
wobei die herausnehmbare Kartusche (54) an dem Gehäuse (12) und in der Aufnahmeeinrichtung (53) befestigbar ist.

4. Verdichter nach einem der Ansprüche 1 bis 3,
wobei die herausnehmbare Kartusche (54) eine Öffnung (60) aufweist, die Atmosphärendruck ausgesetzt ist, um eine visuelle Einschätzung des Sättigungsniveaus der Kartusche zu erleichtern.

5. Verdichter nach einem der vorausgehenden Ansprüche,
mit einer Passage (50) in dem Gehäuse (12), die zu der Aufnahmeeinrichtung (53) führt.

6. Verdichter nach einem der vorausgehenden Ansprüche,
wobei der Wellenabdichtmechanismus eine mechanische Wellendichtung (44, 46), eine erste und eine zweite Gleitringdichtung (29, 33) sowie eine Lippendichtung (38) aufweist, wobei sich der Raum (40) zwischen der zweiten Gleitringdichtung (33) und der Lippendichtung (38) befindet.

7. Verdichter nach einem der vorausgehenden Ansprüche,
wobei es sich bei der Welle um eine Kurbelwelle (18) handelt.

## Revendications

1. Compresseur (10) comprenant :
un boîtier (12);
un arbre (18) ayant des joints d'étanchéité d'arbre (29, 33) ;
un lubrifiant;
un dispositif de compression (14, 16) pour compresser un réfrigérant ;
un mécanisme d'étanchéité d'arbre (31) utilisant ledit lubrifiant pour empêcher le réfrigérant du compresseur de s'échapper du boîtier (12) du compresseur ;
un espace (40) à l'intérieur dudit mécanisme d'étanchéité d'arbre (31), dans lequel ledit lubrifiant se collecte ;
un mécanisme de déviation (48 ; 50) pour diriger une quantité excédentaire dudit lubrifiant dudit espace (40) ; et
un dispositif de réception (53) pour recevoir ladite quantité excédentaire dudit lubrifiant dudit mécanisme de déviation; **caractérisé en ce qu'**il comprend en outre :
une cartouche amovible (54) destinée à être placée dans ledit dispositif de réception (53) pour collecter ladite quantité excédentaire dudit lubrifiant.

2. Compresseur selon la revendication 1, dans lequel ladite cartouche amovible (54) comprend un matériau absorbant pour absorber ladite quantité excédentaire dudit lubrifiant.

3. Compresseur selon la revendication 1 ou 2, dans lequel ladite cartouche amovible (54) peut être fixée sur le boîtier (12) et dans ledit dispositif de réception (53).

4. Compresseur selon l'une quelconque des revendications 1 à 3, dans lequel ladite cartouche amovible (54) comprend une ouverture (60) exposée à la pression atmosphérique pour faciliter une évaluation visuelle du niveau de saturation de ladite cartouche.

5. Compresseur selon l'une quelconque des revendications précédentes, comprenant un passage (50) dans ledit boîtier (12) conduisant audit dispositif de réception (53).

6. Compresseur selon l'une quelconque des revendications précédentes, dans lequel ledit mécanisme d'étanchéité d'arbre comprend un joint d'étanchéité mécanique d'arbre (44), des premier et second joints d'étanchéité de face (29, 33) et un joint d'étanchéité à lèvre (38), ledit espace (40) étant situé entre ledit second joint d'étanchéité de face (33) et ledit joint d'étanchéité à lèvre (38).

7. Compresseur selon l'une quelconque des revendications précédentes, dans lequel ledit arbre est un vilebrequin (18).
